# EUROPEAN PATENT SPECIFICATION

(11) **EP 0 949 219 B1**
(45) Date of publication and mention of the grant of the patent: **19.09.2001**
(21) Application number: 97920488.0
(22) Date of filing: 07.05.1997
(51) Int. Cl.: C04B 41/80, C04B 33/32, B29C 53/04, F27B 5/14

(54) **THE PROCESS AND ARC OVEN FOR BENDING CERAMIC FLAT SHEETS INTO CERAMIC CURVED SHEETS BY HEAT TREAT**
VERFAHREN UND OFEN MIT BOGENFÖRMIG ANGEORDNETEN HEIZELEMENTEN ZUM BIEGEN VON FLACHEN KERAMISCHEN FOLIEN ZU GEKRÜMMTEN KERAMISCHEN FOLIEN MITTELS WÄRMEBEHANDLUNG
PROCEDE ET FOUR A ARC POUR LE PLIAGE DE FEUILLES DE CERAMIQUE PLATES POUR LES CONVERTIR EN FEUILLES DE CERAMIQUE COURBES PAR TRAITEMENT THERMIQUE

(30) Priority: 07.05.1996 CN 96115770
(43) Date of publication of application: 13.10.1999
(73) Proprietor: New Material Research institute Of Shandong Academy Of Sciences, Jinan City, Shandong 250014 (CN)
(72) Inventor: CAO, Shuliang, Jinan City, Shandong 250014 (CN); DU, Yi, Jinan City, Shandong 250014 (CN); XU, Jianhua, Jinan City, Shandong 250014 (CN)
(74) Representative: Prato, Roberto
(86) International application number: CN9700041
(87) International publication number: WO9742134

(56) References cited:
- CN-A- 1 071 362
- CN-A- 1 118 772

## Description

### Technical Field

The invention relates to a process for manufacturing ceramic curved sheets, more specifically, to a process and (arc) curved oven for bending ceramic flat sheets into ceramic curved sheets by (heat treat) heat-treatment.

### Background Art of the Invention

One of the trends in morden building is that more and more "curved and circular corner" is used to replace "flat and right angle", i.e., arc wall, circular comer and circular column are used to replace the traditional flat wall, comer with right angle and square column respectively, forming a great amount of curved surface on buildings.

In the previous art, curved wall surfaces and circular corners were decorated by using small size ceramic tiles, colored or coated flat glass sheets, curved glass sheets and curved stainless steel sheets as ornament materials, and circular columns were decorated by using small ceramic tiles, polished stainless steel sheets, curved plastics sprayed steel sheets, ground granite or marble curved sheets as ornament materials.

When using the ground granite or marble curved sheets as the ornament materials, there exist some disadvantages such as low utilizing rate of the raw stone materials, large amount of cutting and grinding work, low efficiency, thereby resulting in their high price. When the curved surface of buildings was decorated with small size ceramic tiles, the curved surface was constitute by large amount of small plane, the advantage of which is low cost but the decorating effect of the ceramic tiles is not very satisfactory.

Therefore, there is an increasing demand for ceramic curved sheets in building industry recently. The ceramic curved sheets, also known as ceramic arc sheets, building ceramic curved ornament sheets or building ceramic arc ornament sheets, is a kind of ceramic products with curved shape.

Japanese patent application (laid-open) No. 1 - 305867 disclosed a process for producing ceramic curved sheets, including placing a ceramic green sheet with a flat or a slightly curved shape on a curved surface of refractory supports or supporting the ceramic green sheet with refractory supports, and putting the same into an oven, heating to a high temperature to make the ceramic green sheet softening and bending, thereby obtaining the ceramic curved sheet.

The applicant of the invention disclosed several processes for producing ceramic curved sheets from ceramic flat sheets previously. For example, Chinese Patent CN91106432.X disclosed a process for producing ceramic curved sheets by using curved refractory mould. The process can be used to produce expected ceramic curved sheets with accurate size, but it has the disadvantages of low productivity and high energy consumption. Chinese Patent application CN 94110777.9 disclosed a process for producing ceramic curved sheets with multilayer refractory mould. The process has the advantage of high produtivity, but it is difficult to produce products with identical radius of curvature in one oven due to the temperature difference between the upper part and the lower part of the oven. Since the curved shaping surface was not adopted, the ceramic curved sheets obtained have low accuracy of size, especially for producing the products with small radius of curvature.

### Disclosure of The Invention

The object of the invention is to provide a process for manufacturing ceramic curved sheets with various radii of curvature and high accuracy of size in low energy consumption and low cost.

The ceramic flat sheets according to the present invention refer to fired porcelain, semi-porcelain or pottery sheets for the building decoration, with glaze or unglazed, ground or unground surface. It should be understood that the ceramic flat sheets according to the present invention refer to the ceramic sheets with flat shape, but also include slightly curved ceramic sheets.

The first aspect of the present invention provide a process for bending ceramic flat sheets into ceramic curved sheets, including the following steps: 1) placing the ceramic flat sheet into an oven chamber defined by electric heating elements, at least some of which are in curved arrangement; 2) controlling the heating temperature and time of the oven chamber to make the ceramic flat sheet softening and bending until one surface of the sheet contacts and comforms with curved shaping surface defined by the electric heating elements; 3) cooling the oven chamber and removing the ceramic curved sheet.

In the process of the present invention described above, the heating temperature and time, which depend on the materials of the ceramic flat sheets, the radius of curvature and size of the ceramic curved sheets to be produced, can be determined by the person skilled in the art through conventional experiments.

According to one embodiment of the present invention, the heating temperature of the oven chamber is in the range of 550 °C -1200 °C.

According to another embodiment of the present invention, the radius of ceramic curved sheets prepared by the previous described process is great than or equals to 0.1 meter.

According to still another embodiment of the present invention, in the process according to the first aspect of the invention, at least one anchoring component is bonded to the back surface of the said ceramic flat sheet with low melting point ceramic slurry prior to the step 1), the anchoring component is a ceramic component having a big end and a small end and there is a groove at the small end, and the small end of the anchoring component is bonded to the ceramic flat sheet, the anchoring component being fired together with the ceramic flat sheet and a through hole being formed at the joint between the anchoring component and the ceramic flat sheet after the heat treatment. The ceramic curved sheet with the anchoring component has the following advantages, i.e. when the ceramic curved sheet with the anchoring component is bonded to the building facade, the big end of the anchoring component can be pressed into the cement mortar layer or bonding layer, thereby increasing the bonding force. The ceramic curved sheet can be fixed firmly to the facade of a building with the aid of copper wires or other metal wires which pass through the hole formed at the joint and connected to fixing components in the walls of the building.

According to still another embodiment of the present, after the step 3) of the process described previously, the ceramic curved sheet can be ground by manual or mechanical method. The grinding can be carried out by the methods well known to the persons skilled in the art. For example, the grinding and polishing can be carried out by circular grinder, internal grinder, oscillating grinder, abrasive belt grinder.

According to the second aspect of the present invention, the invention provides a curved oven for bending ceramic flat sheets into ceramic curved sheets, which comprises electric heating elements, heat insulation materials and a oven shell, characterized in that at least some of the electric heating elements are in curved arrangements, forming a curved shaping surface divectly; or that a layer of refractory material is filled and covered on said electric heating elements which are in curved arrangement, forming a continuous, smooth curved shaping surface ; or that a curved refractory lining is installed on and contacted tightly with the curved surface defined by the electric heating elements in a curved arrangement, thereby forming a continuous, smooth curved shaping surface by at least part surface of the refractory lining; wherein the radius of the said curved shaping surface is identical to that of the ceramic curved sheet to be produced.

The electric heating elements of the curved oven according to the present invention are well known in the art, for example, they can be the elements made from silicon carbide, molybdenum silicide, graphite or electric resistance wires etc., which can release heat by passing through electricity. The shape of the electric heating elements can be rod, tube, strip, block or plate.

The inner top face of the curved oven according to the present invention can be constituted by insulation materials or some electric heating elements can also be included so long as to obtain a homogeneous temperature field in the oven chamber.

The curved shaping surface of the curved oven according to the present invention can be designed that the concave surface is upwarding or the convex surface is upwarding. In practice, two ends of a ceramic flat sheet are placed on the curved shaping surface if the concave surface of the curved shaping surface is upward. If the convex surface of the surface shaping surface is upward, the middle of the ceramic flat sheet is placed on the convex surface.

The process for bending ceramic flat sheets into ceramic curved sheets according to the present invention is a significant improvment to the process for making ceramic curved sheets with curved refractory mould. The curved refractory mould has a large volume and is heavy. Generally, the mass of the curved refractory mould is as several times to tens times as that of the ceramic sheet on it. The mould has to be heated together with the ceramic sheet. Since the mould has a high heat capacity, its heating or cooling needs very long time, leading to a very high energy consumption and low productivity. For example, when bending a ceramic flat sheet with the size of 600mm × 600mm × 10mm and weight of 8kg into a curved sheet by heat tratment, the mass of the curved mould made of common refractory is about 100kg. In the process according to the present invention, since the curved shaping surface which is substantially defined by electric heating elements is used, the curved refractory mould is cancelled, thereby descreasing the heat capacity in the system, resulting in the decrease of heating and cooling time, and decreasing the energy consumption. The goal of increasing the productivity and decreasing the cost have been achieved.

### Description of the Accompanying Drawings

The present invention will be described in detail by referring to the accompanying drawings:
Fig. 1 shows the sectional view of the curved oven in one embodiment of the present invention, in which some of the electric heating elements 5 are arranged in arc shape, forming a concave curved shaping surface 10;
Fig. 2 shows the sectional view of the curved oven in another embodiment of the present invention, in which a continuous, smooth concave curved shaping surface 10' is formed by filling and covering a layer of refractory materials on the electric heating elements 5 in curved arrangement;
Fig. 3 shows the sectional view of the curved oven in still another embodiment of the present invention, in which a cylindrical refractory lining 13 is installed on the curved surface defined by the electric heating elements 5 and tightly appressed on the electric heating elements, thereby a concave curved shaping surface 10'' being formed by part of the inner surface of the cylindrical refractory lining;
Fig. 4 shows the sectional view of the curved oven in still another embodiment of the present invention, in which a semi-circular refractory lining 13 is installed on the curved surface defined by the electric heating elements 5 and tightly appressed on the electric heating elements, thereby a concave curved shaping surface 10" being formed by the inner surface of the refractory lining;
Fig. 5 shows the sectional view of the curved oven in still another embodiment of the present invention, in which a convex curved shaping surface 10 is directly formed by the electric heating elements 5 in a curved arrangement.

In the accompanying drawings, the same constructures or components in the various embodiments of the present invention are designated with identical reference numbers. The meanings of the numbers which are not mentioned in the above description of the accompanying drawings are as follows: 1 representing the oven shell; 2 the insulation material; 3 the anchoring components bonded to the ceramic flat sheets; 4 the ceramic flat sheets before the heat treatment; 7 the ceramic curved sheets after the heat treatment; 8 the oven chamber; 9 the surface of the ceramic sheet to be conform and contact with the curved shaping surface after the bending by the heat treatment.

### Best Mode For Carrying Out The Invention

### Example 1

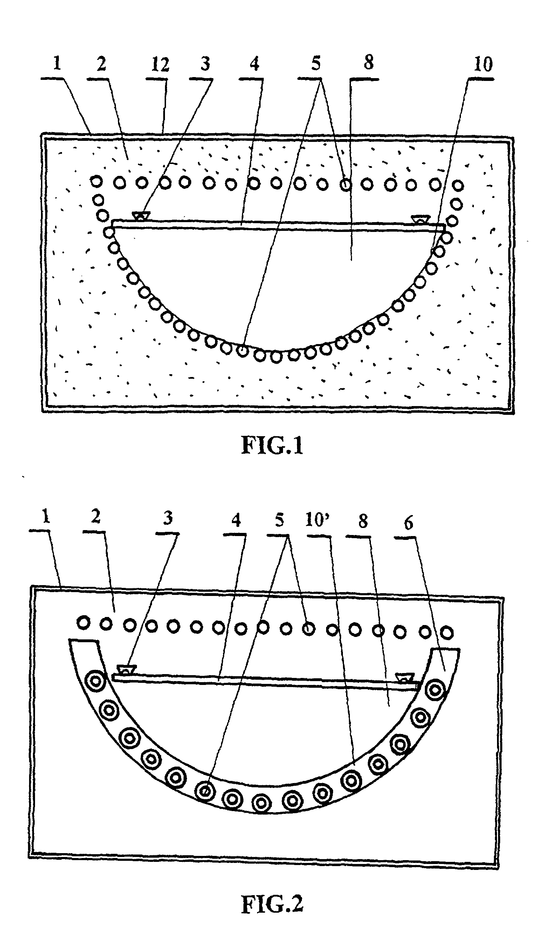

A ceramic flat sheet 4 of 600mm × 600mm × 10mm is placed into a curved oven having the constructure as shown in Fig. 1. The ceramic anchoring components 3 is bonded to the ceramic flat sheet by ceramic slurry with low melting point. The radius of curvature of the curved shaping surface 10 defined by the electric heating elements 5 is 450mm. The ceramic sheet is heating at a temperature of 1080 °C for 20 minutes to make it bend and contact with the curved shaping surface 10. After cooling, a ceramic curved sheet with a radius of curvature of 450mm is obtained which can be used as cylindrical decorating sheet for buildings after its surface being polished with circular grinder.

### Example 2

A ceramic flat sheet 4 of 500mm × 500mm × 10mm is placed into a curved oven having the constructure as shown in Fig. 2. The ceramic anchoring component 3 is bonded to the ceramic flat sheet by ceramic slurry with low melting point. The radius of curvature of the continuous, smooth, curved shaping surface 10' formed by the refractory material 13 is 3m. The ceramic flat sheet is heating at a temperature of 850 °C for 20 minutes to make it bend and contact with the curved shaping surface 10'. After cooling, a ceramic curved sheet with a radius of curvature of 3m is obtained.

### Example 3

A ceramic flat sheet 4 of 600mm × 600mm × 10mm is placed into a curved oven having the constructure as shown in Fig. 1. The ceramic anchoring component 3 is bonded to the ceramic flat sheet by ceramic slurry with low melting point. The radius of curvature of the curved shaping surface 10 defined by the electric heating elements 5 is 600mm. The ceramic sheet 4 is holding at a temperature of 1040 °C for 20 minutes to make it bend and contact with the curved shaping surface 10. After cooling, a ceramic curved sheet with a radius of curvature of 600mm is obtained.

### Example 4

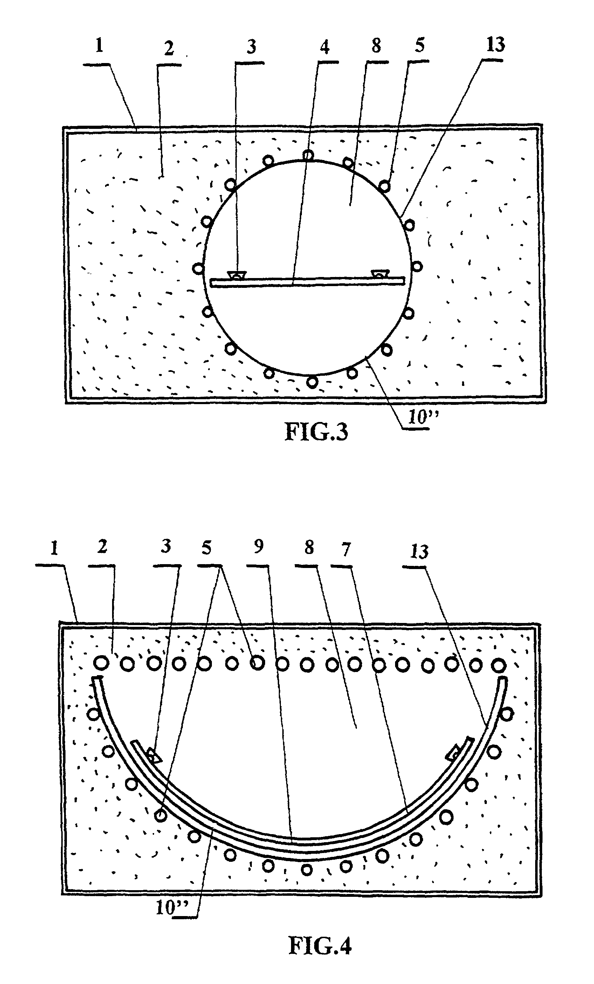

A ceramic flat sheet 4 of 1000mm × 1000mm × 14mm is placed into the curved oven having the constructure as shown in Fig. 4. The ceramic anchoring component 3 is bonded to the ceramic flat sheet by ceramic slurry with low melting point. The radius of curvature of the curved shaping surface 10" defined by the refractory lining 13 is 1.7m. The ceramic sheet is holding at a temperature of 1000 °C for 15 minutes to make it bend and to make one surface 9 of it contact with the curved shaping surface 10". After cooling, a ceramic curved sheet with a radius of curvature of 1.7m is obtained.

### Example 5

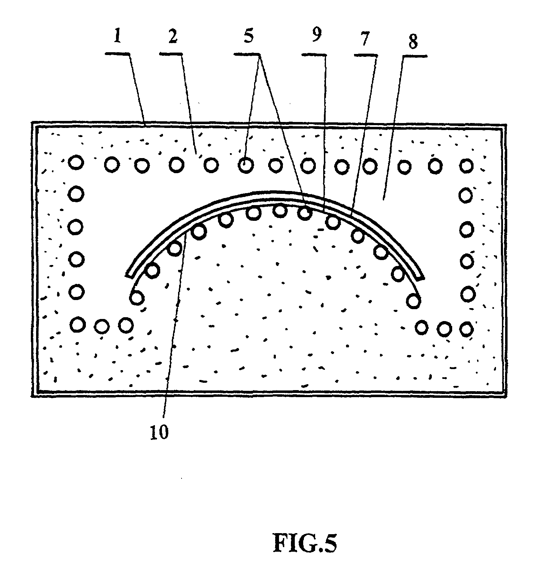

A ceramic flat sheet of 1200mm × 800mm × 14mm is placed into a curved oven having the constructure as shown in Fig. 5. The radius of curvature of the curved shaping surface 10 defined by the electric heating elements 5 is 900mm. The ceramic sheet is holding at a temperature of 1020 °C for 15 minutes to make it bend and to make one surface 9 of it contact with the curved shaping surface 10. After cooling, a ceramic curved sheet with a radius of curvature of 900mm is obtained.

## Claims

1. A process for bending a ceramic flat sheet into a ceramic curved sheet, including the following steps: 1) placing the ceramic flat sheet (4) into an oven chamber (8) defined by the electric heating elements (5), at least some of the electric heating elements (5) are in a curved arrangement; 2) controlling the heating temperature and time of the oven chamber to make the ceramic flat sheet (4) to be heated and bended until one surface (9) of the sheet contacts and conforms with the curved shaping surface (10, 10', 10") substantially defined by the electric heating elements(5); 3) cooling the oven chamber and removing the ceramic curved sheet (7).

2. The process according to claim 1, **characterised in that** the heating temperature of the oven chamber (8) is controlled in a range from 550 °C to 1200 °C.

3. The process according to claim 1, **characterised in that** the ceramic flat sheet(4) refers to the fired porcelain, semi-porcelain or pottery ceramic sheet with polished or unpolished, glazed or unglazed surface.

4. The process according to claim 1, **characterised in that** the radius of curvature of the resulting ceramic curved sheet is great than or equals to 0.1m.

5. The process according to claim 1, **characterised in that** at least one anchoring component (3) is bonded to the back surface of the said ceramic flat sheet (4) with low melting point ceramic slurry prior to the step 1), the anchoring component (3) is a ceramic component having a big end and a small end and there is a groove at the small end, and the small end of the anchoring component is bonded to the ceramic flat sheet, the anchoring component being fired together with the ceramic flat sheet and a through hole being formed at the joint between the anchoring component and the ceramic flat sheet after the heat treatment.

6. The process according to any one of claims 1 to 5, **characterised in that** the ceramic curved sheet obtained from the step 3) can be ground by manual or mechanical methods.

7. A curved oven for bending a ceramic flat sheet into a ceramic curved sheet, comprising electric heating elements (5), insulation materials (2) and the oven shell (12), **characterised in that** at least some of the electric heating elements (5) are in a curved arrangement, forming a curved shaping surface (10) directly; or that a layer of refractory material (6) is filled and covered on said electric heating elements (5) in curved arrangement, forming a continuous, smooth curved shaping surface(10'); or that a curved refractory lining (13) is installed on and contacted tightly with the curved surface defined by the electric heating elements in a curved arrangement, thereby forming a continuous, smooth curved shaping surface (10") by at least part surface of the refractory lining; wherein the radius of the curved shaping surface (10, 10', 10") is identical to that of the ceramic curved sheet to be produced.

8. The curved oven according to claim 7, **characterised in that** the electric heating elements (5) can be rod, tubular, strip, block or plate shape.

9. The curved oven according to claim 7, **characterised in that** the concave surface of the curved shaping surface (10, 10', 10") is upward.

10. The curved oven according to claim 7, **characterised in that** the convex surface of the curved shaping surface (10) is upward.

11. The curved oven according to any one of claims 7 to 10, **characterised in that** the refractory lining is composed of rod, tubular, strip, block or plate refractory.

## Patentansprüche

1. Ein Verfahren zum Biegen einer flachen Keramikplatte in eine gekrümmte Keramikplatte mit den folgenden Schritten:
1) Anordnen der flachen Keramikplatte (4) in einer Ofenkammer (8), die durch elektrische Heizelemente (5) definiert ist, von denen wenigstens einige elektrische Heizelemente (5) eine gekrümmte Anordnung aufweisen;
2) Steuern der Heiztemperatur und -zeit der Ofenkammer, um die flache Keramikplatte (4) zu heizen und zu biegen, bis eine Oberfläche (9) des Bogens mit der gekrümmten formgebenden Oberfläche (10, 10', 10"), die im wesentlichen durch die elektrischen Heizelemente (5) definiert ist, in Berührung kommt und übereinstimmt;
3) Kühlen der Ofenkammer und Entfernen der gekrümmten Keramikplatte (7).

2. Verfahren nach Anspruch 1, **dadurch gekennzeichnet, dass** die Heiztemperatur der Ofenkammer (8) im Bereich von 550°C bis 1200°C geregelt ist.

3. Verfahren nach Anspruch 1, **dadurch gekennzeichnet, dass** sich die flache Keramikplatte (4) auf gebranntes Porzellan, Porzellanimitat oder Töpferei-Keramikplatten mit polierten oder unpolierten, glasierten oder unglasierten Oberflächen bezieht.

4. Verfahren nach Anspruch 1, **dadurch gekennzeichnet, dass** der Krümmungsradius der resultierenden gekrümmten Keramikplatte größer oder gleich 0,1 m ist.

5. Verfahren nach Anspruch 1, **dadurch gekennzeichnet, dass** vor Schritt 1) wenigstens ein Befestigungselement (3) auf der Rückseite der flachen Keramikplatte (4) mit niedrig schmelzendem Keramikbrei fixiert ist, wobei das Befestigungselement (3) ein keramisches Element mit einem breiten und einem schmalen Ende ist und eine Rille sich an dem schmalen Ende befindet und wobei das schmale Ende des Befestigungselements an der flachen Keramikplatte fixiert ist, das Befestigungselement zusammen mit der flachen Keramikplatte gebrannt wird und eine Durchgangsöffnung am Übergang zwischen dem Befestigungselement und der flachen Keramikplatte nach der Wärmebehandlung gebildet wird.

6. Verfahren nach einem der Ansprüche 1 bis 5, **dadurch gekennzeichnet, dass** die aus Schritt 3) erhaltene gekrümmte Keramikplatte mittels manueller oder maschineller Methoden geschliffen werden kann.

7. Gekrümmter Ofen zum Biegen einer flachen Keramikplatte in eine gekrümmte Keramikplatte, elektrische Heizelemente (5), Isolationsmaterial (2) und einen Ofenmantel (12) enthaltend, **dadurch gekennzeichnet, dass** wenigstens einige der elektrischen Heizelemente (5) eine gekrümmte Anordnung aufweisen, die unmittelbar eine gekrümmte formgebende Oberfläche (10) bilden; oder dass eine Schicht feuerfesten Materials (6) in die elektrischen Heizelemente (5) gefüllt ist und diese in einer gebogenen Anordnung bedeckt und dabei eine kontinuierliche, glatt gekrümmte formgebende Oberfläche (10') bildet; oder dass eine gekrümmte, feuerfeste Auskleidung (13) auf der gekrümmten Oberfläche, die durch die elektrischen Heizelemente in gekrümmter Anordnung definiert ist, angebracht ist und mit dieser eng anliegend in Berührung steht und dabei eine kontinuierliche, glatt gekrümmte formgebende Oberfläche (10") durch wenigstens eine Teilfläche der feuerfesten Auskleidung bildet; wobei der Radius der gekrümmten formgebenden Oberfläche (10, 10', 10") identisch mit dem der herzustellenden gekrümmten Keramikplatte ist.

8. Gekrümmter Ofen nach Anspruch 7, **dadurch gekennzeichnet, dass** die elektrischen Heizelemente (5) stab-, rohr-, streifen-, block- oder plattenförmig sein können.

9. Gekrümmter Ofen nach Anspruch 7, **dadurch gekennzeichnet, dass** die konkave Oberfläche der gekrümmten formgebenden Oberfläche (10, 10', 10") aufwärts gerichtet ist.

10. Gekrümmter Ofen nach Anspruch 7, **dadurch gekennzeichnet, dass** die konvexe Oberfläche der gekrümmten formgebenden Oberfläche (10) aufwärts gerichtet ist.

11. Gekrümmter Ofen nach einem der Ansprüche 7 bis 10, **dadurch gekennzeichnet, dass** die feuerfeste Auskleidung aus feuerfestem Stab-, Rohr-, Streifen-, Block- oder Plattenmaterial zusammengesetzt ist.

## Revendications

1. Procédé de pliage d'une feuille de céramique plate en une feuille de céramique incurvée incluant les étapes suivantes :
1) mise en place de la feuille de céramique plate (4) dans la chambre du four (8) définie par les éléments de chauffage électrique (5), certains ou moins des éléments électriques (5) sont conformes de manière à être incurvés ;
2) contrôle de la température de chauffe de la chambre du four et du temps afin que la feuille plate de céramique (4) soit chauffée et pliée jusqu'à qu'une surface (9) de la feuille soit en contact et en conformité avec la forme de la surface incurvée (10,10', 10") définie en substance par les éléments de chauffage électrique (5) ;
3) refroidissement de la chambre du four et déplacement de la feuille de céramique incurvée.

2. Procédé selon la revendication 1 **caractérisé en ce que** la température de la chambre du four (8) est contrôlée et comprise de 550° à 1200°.

3. Procédé selon la revendication 1, **caractérisé en ce que** la feuille de céramique plate (4) concerne des feuilles de porcelaine cuite, de semi-porcelaine ou de poterie céramique ayant une surface polie ou non-polie, vernie ou non-vernie.

4. Procédé selon la revendication 1 **caractérisé en ce que** le rayon d'incurvation de la feuille de céramique incurvée obtenue est plus grand ou égal à 0.1m.

5. Procédé selon la revendication 1 **caractérisé en ce qu'**au moins un des composants d'ancrage (3) est fixé à la surface arrière de la dite feuille plate de céramique (4) avec un mélange de céramique à bas point de fusion antérieur à l'étape 1), l'élément d'ancrage (3) est un composant de céramique ayant une extrémité large et une extrémité fine, celle-ci ayant une rainure, et l'extrémité fine du composant d'ancrage est fixée à la feuille plate de céramique, le composant d'ancrage étant chauffé avec la feuille plate de céramique par le moyen d'une cavité formée au joint du composant d'ancrage et de la feuille de céramique plate après le traitement thermique.

6. Procédé selon l'une quelconque des revendications 1 à 5, **caractérisé en ce que** la feuille de céramique incurvée obtenue à l'étape 3) peut être obtenue par une méthode manuelle ou mécanique.

7. Four incurvé pour le pliage d'une feuille de céramique plate afin d'obtenir une feuille de céramique courbe, comprenant des éléments de chauffage électrique (5), du matériel isolant (2), et la carcasse du four (12), **caractérisé en ce que** au moins un des éléments de chauffage électrique (5) est disposé de manière courbe, formant une surface de forme incurvée (10) directement ; ou une couche de matériel réfractaire (6) remplie et couverte des dits éléments de chauffage électrique (5) disposés en forme incurvée, formant une surface lisse courbe et continue (10') ; ou un alignement (une couche) courbe réfractaire (13) est installé et en contact étroit avec la surface incurvée définie par les éléments électriques de chauffage disposés en forme incurvée, et qui par ce moyen forme une surface lisse de forme courbe (10") par au moins une partie de la surface de la couche réfractaire ; dans laquelle le rayon de la surface de forme courbe (10,10', 10") est identique à celle de la feuille de céramique courbe qui sera produite.

8. Four incurvé selon la revendication 7 **caractérisé en ce que** les éléments de chauffage électriques (5) peuvent être en forme de tige (rod), tubulaires, en bandes, en bloc, ou de forme plate.

9. Four incurvé selon la revendication 7 **caractérisé en ce que** la surface concave de la surface de forme courbe (10,10',10") est au-dessus.

10. Four incurvé selon la revendication 7 **caractérisé en ce que** la surface convexe de la surface de forme courbe (10, 10', 10") est au-dessous.

11. Four incurvé selon l'une quelconque des revendications 7 à 10, **caractérisé en ce que** la couche réfractaire est composée de tiges, tubes, bandes, blocs ou de matériel réfractaire plat.
